# EUROPEAN PATENT SPECIFICATION

(11) **EP 2 427 301 B1**
(45) Date of publication and mention of the grant of the patent: **17.04.2013**
(21) Application number: 10732419.6
(22) Date of filing: 04.05.2010
(51) Int. Cl.: B23Q 11/12, F16N 29/00, F16C 33/66, B23Q 11/10

(54) **MINIMAL LUBRICATION DEVICE AND PROCESS**
MINIMALMENGESCHMIERUNGSVORRICHTUNG UND -VERFAHREN
DISPOSITIF ET PROCEDE DE LUBRIFICATION MINIMALE

(30) Priority: 07.05.2009 IT MI20090776
(43) Date of publication of application: 14.03.2012
(73) Proprietor: MWM Schmieranlagen S.r.L., 20068 Peschiera Borromeo (Milano) (IT)
(72) Inventor: MAZZONI, Maurizio, Claudio, I-20135 Milano (IT)
(74) Representative: Ripamonti, Enrico
(86) International application number: PCT/IB2010/001043
(87) International publication number: WO 2010/128380

(56) References cited:
- DE-A1-102006 030 651
- JP-A- 2 271 197
- JP-A- 2006 258 263

## Description

The present invention relates to a device and process for minimal lubrication, particularly with an air-oil mixture, mainly for ball bearings or for lubricating chip removal machine tools, in accordance with the introduction to the main claim. Such a device forms the subject of DE102006030651.

Traditional minimal lubrication systems with lubricant in the form of an air-oil mixture are used for the minimal lubrication of ball bearings of spindles for high speed machine tools such as machining centres, milling machines, boring machines, grinding machines, punching machines, lathe centres and all rolling bearings for supporting high speed rotary shafts.

These lubrication systems often require previous verification of their operating conditions. In this respect, as they are used in industrial machinery often operating continuously, they have to be subjected to constant efficiency monitoring.

Moreover any interruption in the pressurized air feed transporting the lubricant droplets also has to be automatically monitored.

Any variations or anomalies in lubricant or air-oil mixture feed must also be automatically monitored.

In this respect, currently known lubrication systems are monitored by optical sensors (such as that described in DE 102006030651) positioned in those pipes external to the two-phase mixer which carry the two-phase flow created in the two-phase mixer to the lubrication site.

These lubrication systems show applicational limits, including a minimum controllable lubricant dispensing quantity and a maximum diameter of the monitored pipes.

Optical monitoring of a lubricant vein in the liquid state moving within a transparent pipe is in fact particularly difficult if the lubricant veins are particularly small and diffuse, especially when the pipe diameter is relatively large, because a greater area results in greater vein dispersion. In particular, the method of monitoring known lubrication systems, where monitoring takes place in a conduit though which the two-phase fluid flows, do not allow correct measurement of the small lubricant quantities in the liquid state (atomized) within an air stream because of the position (formation) if said lubricant veins within the conduit. In this respect, such veins can lie distant from the conduit longitudinal axis, this being the region for which the optical sensors are calibrated to sense the lubricant presence. For this reason, the sensing reliability is considerably reduced.

In particular, the limits imposed by current technologies are responsible for the difficulty of monitoring quantities not exceeding 10 mm³ inside pipes of internal diameter not less than 3 mm. For example a dispensed quantity of 10 mm³ dispersed within a pipe of 5 mm internal diameter is difficult to sense by an optical sensor of normal technology at an acceptable price.

This difficulty derives from the fact that, as stated, the thin fluid vein stream lies in an indeterminate point of the pipe inner circumference, which in fact does not correspond to the focal point of the sensor optics. In this respect, it must be considered that the point in which the optical sensors have their greatest sensing capacity is the centre of the pipe diameter, which corresponds to the focal point of the sensor.

From this derives the requirement of having a narrower monitoring area or, vice versa, but not implementable, a greater lubricant quantity passing through the sensor monitoring optics within a larger area.

An object of the present invention is to provide a device and process for minimal lubrication with an air-oil mixture, in particular for ball bearings, or for lubricating chip removal machine tools, which obviate the stated drawbacks of the traditional systems used.

A particular object of the invention is to provide a device and process for minimal lubrication with an air-oil mixture, which offer precise and reliable monitoring, even with dispensed lubricant quantities not exceeding 10 mm³, and if using an air-oil mixture feed pipe of internal diameter not less than 3 mm. Another object of the present invention is to provide a device and process for minimal lubrication with an air-oil mixture, which ensure that the targeting of the dispensed lubricant into the pneumatic flow is monitored, i.e. the presence of a determined pneumatic pressure which ensures that the lubricant veins are carried to the friction points.

Another object of the present invention is to provide a device and process for minimal lubrication with an air-oil mixture, in particular for lubricating ball bearings, which are able to automatically indicate any lubricant or pressure deficiencies in the air-oil mixture which could cause functional irregularities with possible seizure of the bearings subjected to lubrication.

The technical aim, together with these and other objects, are attained by a device and process for minimal lubrication with an air-oil mixture, in accordance with the accompanying claims.

Advantageously, with the process and device of the invention, effective monitoring by the sensor can be achieved both for the dispensing of the first phase and the presence, for the second phase, of suitable pressurization for transporting the first phase.

Likewise, control means are provided interacting with the sensor, with the dispensing unit of the first phase, and with the feed unit of the second phase, such as to monitor and modify the lubrication process parameters in the light of information from the sensor.

Other characteristics of the present invention are defined in the subsequent claims.

Further characteristics and advantages of the invention will be more apparent from the description of a preferred but non-exclusive embodiment of the device and process for minimal lubrication with an air-oil mixture according to the invention, illustrated by way of non-limiting example in the accompanying drawings, in which:

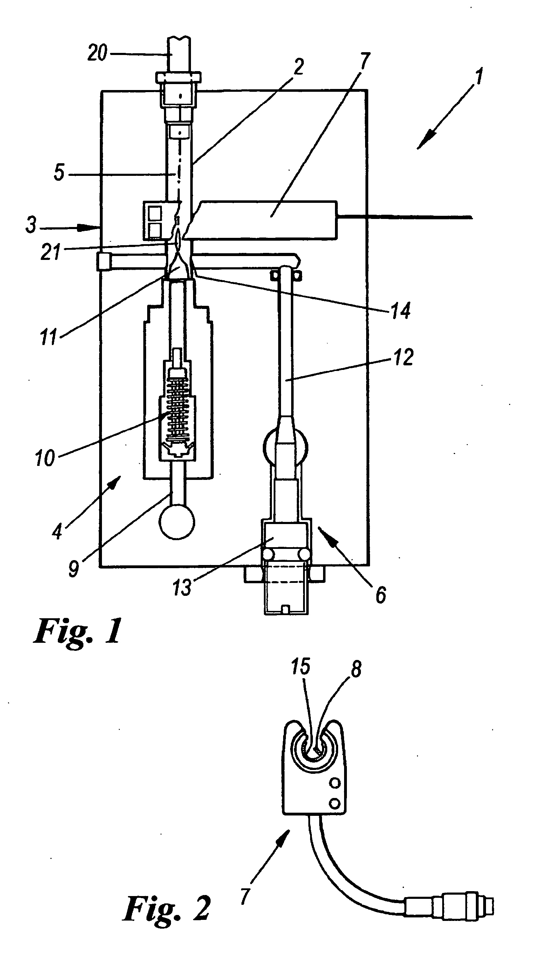

Figure 1 is a section through a two-phase mixer according to the invention;
Figure 2 is a side elevation of the sensor associated with the two-phase mixer of Figure 1.

With reference to the figures, these show a device for minimal lubrication with a two-phase mixture obtained by dispensing a first liquid lubricant phase 21 into a stream of a second transport phase for the first liquid lubricant phase along a mixing conduit 2 of a two-phase mixer 3.

The mixing conduit 2 is preferably of transparent material.

The first lubricant phase 21 is especially oil, whereas the second transport phase for the first phase is especially air.

The use of the device 1 is particularly aimed at minimal lubrication of ball bearings or chip removal tool machining.

The two-phase mixer 3 comprises a first unit 4 for the gauged directional dispensing of the first phase along an axis 5 of the mixing conduit 2, and a second unit 6 for feeding a stream of the second phase into the mixing conduit 2.

A sensor 7 for generating a signal indicating the presence of the first phase in the second phase is positioned with its focal centre 8 on the axis 5 of the mixing conduit 2 such as to collimate with the trajectory of the first phase dispensed into the mixing conduit 2.

Suitable control means (not shown) are arranged to interact with the sensor 7 on the one hand and with the first dispensing unit 4 and/or the second feed unit 6 on the other hand, to modify the lubrication control parameters in relation to the variation in the presence signal generated by the sensor 7.

The control means can comprise an electronic control unit in communication with the sensor 7, with the first dispensing unit 4 and with the second feed unit 6.

The delivery end of the mixing conduit 2 of the two-phase mixer 3 is connected to a second conduit 20 external to the two-phase mixer 3 to carry the two-phase mixture to the lubrication site.

The axis 5 is preferably the central axis of the mixing conduit 2, which in particular is of cylindrical shape.

The sensor 7 is preferably optical, for example of capacitive or optoelectric type, for example an infrared photodiode.

The first dispensing unit 4 comprises a first conduit 9 feeding the first phase to the mixing conduit 2, a feed pump (not shown) and a gauged dispenser 10 positioned within the first feed conduit 9.

The delivery end 11 of the first conduit 9 is advantageously formed with a duckbill non-return valve.

The second feed unit 6 comprises a second conduit 12 which feeds the second phase flow to the mixing conduit 2.

The second feed conduit 12 also comprises a constrictor 13 to regulate this flow.

The delivery end 14 of the second feed conduit 12 is inserted into that region of the mixing conduit 2 which surrounds the delivery end 11 of the first feed conduit 9.

The delivery direction of the first feed conduit 9 is coaxial to the axis 5, whereas the delivery direction of the second feed conduit 12 is transverse to the axis 5.

To obtain effective measurement of the lubricant quantity present in the conduit 2, the sensor 7 is positioned in said mixing conduit 2 in proximity to the delivery end 11 of the first feed conduit 9, i.e. in a position of the conduit 2 in which the oil is present in the liquid phase along its axis 5. The sensor 7 defines a circular sensing area 15 having a diameter substantially corresponding to the external diameter of the mixing conduit 2.

The mixing conduit 2 is present coaxially within the circular sensing area 15.

In this manner the axis 5 of the mixing conduit 2 along which the first phase is dispensed collimates with the focal centre, i.e. with the greatest capacity reading point of the sensor 7.

In other words, directional dosage and the shape of the delivery end of the first feed conduit 9 make it possible to inject the minimum lubricant quantity along an optimal trajectory at the focal centre of the optics of the sensor 7 (close to the end 11), allowing great sensing accuracy and hence the measurement of very small lubricant quantities.

In practice, with the device 1 the dispensed lubricant quantity is able to pass through the sensor 7 with a constrained trajectory, i.e. through the focal centre of the sensor 7, before being completely dispersed into the pneumatic flow of the (atomized) stream of the second phase.

Consequently the device 1 can be used in applications in which even large air flows are fed for minimal lubrication. In particular, the device 1 is compatible with a mixing conduit 2 of internal diameter not less than 3 mm for a dispensed first phase quantity not exceeding 10 mm³.

The position of the sensor 7 is such as to ensure monitoring not only of the presence of the dispensed lubricant but also the presence of the minimum air pressure (pneumatic pressure) necessary for transporting the lubricant veins. Without the presence of a suitable pressurized air flow, lubricant is not transported through the focal centre of the sensor, which hence processes this as a negative presence signal.

Dispensing of the required lubricant quantity is also extremely precise.

In this respect, by virtue of the retention achieved by the duckbill non-return valve 11, lubricant cannot seep out by the action of the negative pressure exerted by the air flow present in the second feed conduit 12 and consequently in the conduit 2. The dispensed lubricant quantity is in fact fed exclusively by the effect of the pressurization generated by the relative feed pump.

The control implemented by the sensing device 7 can have the double function of monitoring passage of the lubricant quantity and of monitoring the presence of a suitable pressure of the air for transporting the lubricant towards the delivery end of the mixing conduit 2.

It must be noted that the control means interact with the first dispensing unit 4 to modify the pressure and/or flow of the dispensed lubricant, and with the second feed unit 6 to modify the pressure and/or flow of the air.

The control means also interact with the sensor 7 to modify its control parameters on the basis of a change in the control parameters of the element subjected to lubrication.

If of optical type, the sensor 7 is adapted to sense the shadow variation projected onto a lens receiving light from the two-phase mixture flow passing through a light beam generated by a light emitter.

The presence signal, which depends on the lubricant quantity present in the two-phase flow and its velocity, is used for control and regulation purposes, as stated.

The sensor 7 is programmable to modify its reading sensitivity continuously by connection to the control means, such as to combine the monitoring conditions with variations in the lubricant process on the basis of the tool machining type, for example due to a tool change or a modification in the tool machining parameters.

The minimal lubrication device and process conceived in this manner are susceptible to numerous modifications and variants, all falling within the scope of the appended claims moreover all details can be replaced by technically equivalent elements, according to the appended claims.

In practice the materials used and the dimensions can be chosen at will depending on requirements and on the state of the art.

## Claims

1. A minimal lubrication process with a two-phase mixture flow obtained by dispensing a first liquid lubricant phase (21) into a stream of a second transport phase for said first phase along a mixing conduit (2) of a two-phase mixer (3), said first phase being fed to said mixing conduit (2) by a first feed conduit (9) of said mixer (3), said second phase being fed to said mixing conduit (2) by a second feed conduit (12) of the mixer (3), said first phase being dispensed in a gauged manner and fed along an axis (5) of said mixing conduit (2), a signal indicating the presence of said first phase and simultaneously of said second phase in said mixing conduit (2) being generated by a sensor (7) positioned with its focal centre (8) on said axis (5) of the mixing conduit (2), the lubrication control parameters being modified in relation to the variation of said presence signal **characterized in that** said sensor is positioned in proximity to a delivery end (11) of the first feed conduit (9), the second transport phase being inserted into the mixing conduit (2) in a region which surrounds the delivery end (11) of the first feed conduit (9), the first phase (21) not being completely dispersed into the second transport phase along the conduit axis (5) in a position wherein it passes through the above sensor (7).

2. A minimal lubrication device (1) with a two-phase mixture flow obtained by dispensing a first liquid lubricant phase (21) into a stream of a second transport phase for said first phase along a mixing conduit (2) of a two-phase mixer (3), said first phase being fed by a first feed conduit (9) to said mixing conduit (2), the second phase being fed to this latter by a second feed conduit (12) of the mixer (3), said two-phase mixer (3) comprising a first unit (4) for the gauged directional dispersion of said first phase along an axis (5) of said mixing conduit (2), a second unit (6) for feeding said stream of said second phase into said at least one mixing conduit (2), this latter comprising a sensor (7) adapted to generate a presence signal for said first phase, control means also being provided to interact with said sensor (7) and with said first unit (4) and/or said second unit (6) to modify the lubrication control parameters in relation to the variation of said presence signal, said sensor (7) being positioned with its focal centre (8) corresponding with said axis (5) of said mixing conduit (2), **characterized in that** said sensor (7) is positioned in proximity to a delivery end (11) of said first feed conduit (9), a delivery end (14) of said second feed conduit (12) being inserted into a region of the mixing conduit (2) which surrounds the above cited delivery end (11) of the first conduit (9), in the position wherein the first liquid lubricant phase (21) passes throug the sensor (7) and is not completely dispersed into the second transport phase along the conduit axis (5).

3. A minimal lubrication device (1) as claimed in claim 2, **characterised in that** the delivery end of said mixing conduit (2) of said two-phase mixer (3) is connected to a conduit (20) external to said two-phase mixer (3) to feed said two-phase mixture to the lubrication site.

4. A minimal lubrication device (1) as claimed in claim 2, **characterised in that** said axis (5) is the central axis of said mixing conduit (2), which is of cylindrical shape.

5. A minimal lubrication device (1) as claimed in one or more of the preceding claims, **characterised in that** said first unit (4) comprises a feed pump and a non-return valve (11) positioned within said first feed conduit (9).

6. A minimal lubrication device (1) as claimed in the preceding claim, **characterised in that** the outlet end (11) of said first conduit (9) is of duckbill shape.

7. A minimal lubrication device (1) as claimed in one or more of the preceding claims, **characterised in that** said sensor (7) is optical.

8. A minimal lubrication device (1) as claimed in one or more of the preceding claims, **characterised in that** said optical sensor (7) is of capacitive type.

9. A minimal lubrication device (1) as claimed in one or more of the preceding claims, **characterised in that** said sensor (7) is optoelectric.

10. A minimal lubrication device (1) as claimed in the preceding claim, **characterised in that** said optoelectric sensor (7) is an infrared photodiode.

11. A minimal lubrication device (1) as claimed in one or more of the preceding claims, **characterised in that** said second unit (6) comprises for said second phase a the second feed conduit (12) presenting a constrictor (13) for regulating the flow of said second phase.

12. A minimal lubrication device (1) as claimed in one or more of the preceding claims, **characterised in that** said mixing conduit (2) has an internal diameter not less than 3 mm, said dispensed quantity of said first phase not exceeding 10 mm³.

13. A minimal lubrication device (1) as claimed in one or more of the preceding claims, **characterised in that** said first phase is oil and said second phase is air.

14. A minimal lubrication device (1) as claimed in claim 2, **characterised by** comprising a plurality of mixing conduits (2), each provided with its own sensor (7).

15. Use of a device (1) claimed in one or more of the preceding claims for minimal lubrication of ball bearings or of chip removal machine tools.

## Patentansprüche

1. Ein minimales Schmierverfahren mit einem Zwei-Phasen-Mischungs-Durchfluss, der erhalten wird, indem eine erste flüssige Schmiermittelphase (21) in einen Strom einer zweiten Transportphase für die genannte erste Phase entlang einer Mischleitung (2) eines Zwei-phasen-mischers (3) eingespeist wird, wobei di genannte erste Phase der genannten Mischleitung (2) durch eine erste Speiseleitung (9) des genannten Mischers (3) zugeführt wird, die genannte zweite Phase der genannten Mischleitung (2) jeweils durch eine zweite Speiseleitung (12) des Mischers (3) zugeführt wird, wobei die genannte erste Phase jeweils abgemessen eingespeist und entlang einer Achse (5) der genannten Mischleitung (2) zugeführt wird, und ein Signal jeweils das Vorhandensein der genannten ersten Phase und gleichzeitig der genannten zweiten Phase in der genannten Mischleitung (2) anzeigt, welches jeweils durch einen Sensor (7) erzeugt wird, der mit seinem Mittelpunkt (8) an der genannten Achse (5) der Mischleitung (2) angeordnet ist, wobei die Schmierungssteuerparameter je nach der Änderung des genannten, das Vorhandensein anzeigenden Signals geändert werden, **dadurch gekennzeichnet, dass** der genannte Sensor in der Nähe eines Auslassendes (11) der ersten Speiseleitung (9) angeordnet ist, wobei die zweite Transportphase in die Mischleitung (2) in einem Bereich eingelassen wird, der das Auslassende (11) der ersten Speiseleitung (9) umgibt und die erste Phase (21) nicht vollständig in die zweite Transportphase entlang der Leitungsachse (5) verteilt wird, und zwar in einer Stellung, in der sie durch den oben genannten Sensor läuft.

2. Eine minimale Schmiervorrichtung (1) mit einem Zwei-Phasen-Mischungs-Durchfluss, der erhalten wird, indem eine erste flüssige Schmiermittelphase (21) in einen Strom einer zweiten Transportphase für die genannte erste Phase entlang einer Mischleitung (2) eines Zwei-Phasen-Mischers (3) eingespeist wird, wobei die genannte erste Phase jeweils durch eine erste Speiseleitung (9) der genannten Mischleitung (2) zugeführt wird, die zweite Phase dieser letzteren durch eine zweite Speiseleitung (12) des Mischers (3) zugeführt wird, wobei der genannte Zwei-Phasen-Mischer (3) eine erste Einheit (4) für die abgemessene Richtverteilung der genannten ersten Phase entlang einer Achse (5) der genannten Mischleitung umfasst und eine zweite Einheit (6) zur Zufuhr des genannten Stroms der genannten zweiten Phase zu der genannten mindestens einen Mischleitung (2), wobei diese letztere einen Sensor (7) umfasst, der geeignet ist, ein das Vorhandensein anzeigendes Signal für die genannte erste Phase zu erzeugen, und Steuerelemente ebenfalls vorgesehen sind, um mit dem genannten Sensor (7) und mit der genannten ersten Einheit (4) und/oder der genannten zweiten Einheit (6) zu interagieren, um die Schmiersteuerparameter je nach der Änderung des genannten, das Vorhandensein anzeigenden Signals entsprechend zu ändern, wobei der genannte Sensor (7) mit seinem Mittelpunkt (8) jeweils in Übereinstimmung mit der genannten Achse (5) der genannten Mischleitung (2) angeordnet ist, **dadurch gekennzeichnet, dass** der genannte Sensor (7) in der Nähe eines Auslass-Endes (11) der genannten ersten Speiseleitung (9) angeordnet ist, und ein Auslass-Ende (14) der genannten zweiten Speiseleitung (12) in einem Bereich der Mischleitung (2) eingesetzt ist, welcher das oben genannte Auslass-Ende (11) der ersten Leitung (9) umgibt, und zwar in der Stellung, an der die erste flüssige Schmierphase (21) durch den Sensor (7) läuft und nicht vollständig in der zweiten Transportphase verteilt wird.

3. Eine minimale Schmiervorrichtung (1) gemäß Anspruch 2, **dadurch gekennzeichnet, dass** das Auslass-Ende der genannten Mischleitung (2) des genannten Zwei-Phasen-Mischers (3) mit einer Leitung (20) verbunden ist, welche sich jeweils außerhalb des genannten Zwei-Phasen-Mischers (3) befindet, um die genannten Zwei-Phasen-Mischung der jeweiligen Schmierstelle zuzuführen.

4. Eine minimale Schmiervorrichtung (1) gemäß Anspruch 2, **dadurch gekennzeichnet, dass** die genannte Achse (5) die Mittelachse der genannten Mischleitung (2) ist, welche eine zylindrische Form aufweist.

5. Eine minimale Schmiervorrichtung (1) gemäß einem oder mehreren der vorausgegangenen Ansprüche, **dadurch gekennzeichnet, dass** die genannte erste Einheit (4) jeweils eine Speisepumpe und ein Rückschlagventil (11) umfasst, welche in der genannten ersten Speiseleitung (9) angeordnet sind.

6. Eine minimale Schmiervorrichtung (1) gemäß dem vorausgegangenen Anspruch, **dadurch gekennzeichnet, dass** das Auslass-Ende (11) der genannten ersten Leitung (9) eine Schnabelform aufweist.

7. Eine minimale Schmiervorrichtung (1) gemäß einem oder mehreren der vorausgegangenen Ansprüche, **dadurch gekennzeichnet, dass** der genannte Sensor (7) optisch ist.

8. Eine minimale Schmiervorrichtung (1) gemäß einem oder mehreren der vorausgegangenen Ansprüche, **dadurch gekennzeichnet, dass** der genannte optische Sensor (7) kapazitiven Typs ist.

9. Eine minimale Schmiervorrichtung (1) gemäß einem oder mehreren der vorausgegangenen Ansprüche, **dadurch gekennzeichnet, dass** der genannte Sensor (7) optoelektrisch ist.

10. Eine minimale Schmiervorrichtung (1) gemäß dem vorausgegangenen Anspruch, **dadurch gekennzeichnet, dass** der genannte optoelektrische Sensor (7) eine infrarote Photodiode ist.

11. Eine minimale Schmiervorrichtung (1) gemäß einem oder mehreren der vorausgegangenen Ansprüche, **dadurch gekennzeichnet, dass** die genannte zweite Einheit (6) für die genannte zweite Phase eine zweite Speiseleitung (12) umfasst, welche eine Verengungsvorrichtung (13) zur Regulierung des Durchflusses der genannten zweiten Phase umfasst.

12. Eine minimale Schmiervorrichtung (1) gemäß einem oder mehreren der vorausgegangenen Ansprüche, **dadurch gekennzeichnet, dass** die genannte Mischleitung (2) einen Innendurchmesser von nicht unter 3 mm aufweist, wobei die genannte, jeweils eingespeiste Menge der genannten ersten Phase 10 mm nicht überschreitet.

13. Eine minimale Schmiervorrichtung (1) gemäß einem oder mehreren der vorausgegangenen Ansprüche, **dadurch gekennzeichnet, dass** die genannte erste Phase jeweils aus Öl und die genannte zweite Phase aus Luft besteht.

14. Eine minimale Schmiervorrichtung (1) gemäß Anspruch 2, **dadurch gekennzeichnet, dass** sie eine Vielzahl von Mischleitungen (2) umfasst, die jeweils mit ihrem eigenen Sensor (7) ausgestattet sind.

15. Die Anwendung einer Vorrichtung (1) gemäß einem oder mehreren der vorausgegangenen Ansprüche zur minimalen Schmierung von Kugellagern oder Spanabhebungsmaschinen.

## Revendications

1. Procédé de lubrification minimale, dont le flux du mélange bi-phasique est obtenu en distribuant une première phase de lubrification liquide (21) dans un cours d'une deuxième phase de transport pour ladite première phase sur la longueur d'un conduit de mélange (2) d'un dispositif de mélange bi-phasique (3), ledit conduit de mélange (2) étant alimenté de ladite première phase par un premier conduit d'alimentation (9) dudit dispositif de mélange (3), ledit conduit de mélange (2) étant alimenté de ladite deuxième phase par un deuxième conduit d'alimentation (12) du dispositif de mélange (3), ladite première phase étant distribuée de manière mesurée et alimentée le long d'un axe (5) dudit conduit de mélange (2), un signal indiquant la présence de ladite première phase et simultanément de ladite deuxième phase dans ledit conduit de mélange (2) étant généré par un capteur (7) placé avec son centre focal (8) sur ledit axe (5) du conduit de mélange (2), les paramètres de contrôle de la lubrification étant modifiés en fonction de la variation dudit signal de présence, **caractérisé en ce que** ledit capteur est placé à proximité d'une extrémité de sortie (11) du premier conduit d'alimentation (9), la deuxième phase de transport étant introduite dans le conduit de mélange (2) dans une partie qui entoure l'extrémité de sortie (11) dudit premier conduit d'alimentation (9), la première phase (21) n'étant pas entièrement distribuée dans la deuxième phase de transport le long de l'axe du conduit (5) dans une position où elle passe à travers le capteur susmentionné (7).

2. Dispositif de lubrification minimale (1), dont le flux du mélange bi-phasique est obtenu en distribuant une première phase de lubrification liquide (21) dans un cours d'une deuxième phase de transport pour ladite première phase sur la longueur d'un conduit de mélange (2) d'un dispositif de mélange bi-phasique (3), ledit conduit de mélange (2) étant alimenté de ladite première phase par un premier conduit d'alimentation (9), ce premier étant alimenté de ladite deuxième phase par un deuxième conduit d'alimentation (12) du dispositif de mélange (3), ledit dispositif de mélange bi-phasique (3) comprenant une première unité (4) pour la distribution directionnelle mesurée de ladite première phase le long d'un axe (5) dudit conduit de mélange (2), une deuxième unité (6) pour l'alimentation dudit cours de ladite deuxième phase à l'intérieur dudit au moins un conduit de mélange (2), ce dernier comprenant un capteur (7) adapté pour la génération d'un signal de présence pour ladite première phase, des dispositifs de contrôle étant également pourvus pour interagir avec ledit capteur (7) et avec ladite première unité (4) et/ou ladite deuxième unité (6) dans le but de modifier les paramètres de contrôle de la lubrification en fonction de la variation dudit signal de présence, ledit capteur (7) étant placé avec son centre focal (8) en correspondance avec ledit axe (5) dudit conduit de mélange (2), **caractérisé en ce que** ledit capteur (7) est placé à proximité d'une extrémité de sortie (11) dudit premier conduit d'alimentation (9), une extrémité de sortie (14) dudit deuxième conduit d'alimentation (12) étant introduite dans une partie du conduit de mélange (2) qui entoure l'extrémité de sortie susmentionnée (11) du premier conduit (9), dans la position où la première phase de lubrification liquide (21) passe à travers le capteur (7) et n'est pas entièrement distribuée dans la deuxième phase de transport le long de l'axe du conduit (5).

3. Dispositif de lubrification minimale (1) selon la revendication 2, **caractérisé en ce que** l'extrémité de sortie dudit conduit de mélange (2) dudit dispositif de mélange bi-phasique (3) est raccordée à un conduit (20) placé à l'extérieur dudit dispositif de mélange bi-phasique (3) dans le but d'alimenter le site de lubrification avec ledit mélange bi-phasique.

4. Dispositif de lubrification minimale (1) selon la revendication 2, **caractérisé en ce que** ledit axe (5) est l'axe central dudit conduit de mélange (2), qui présente une forme cylindrique.

5. Dispositif de lubrification minimale (1) selon une ou plusieurs revendications parmi les revendications susmentionnées, **caractérisé en ce que** ladite première unité (4) comprend une pompe d'alimentation et un clapet de non-retour (11), placés à l'intérieur dudit premier conduit d'alimentation (9).

6. Dispositif de lubrification minimale (1) selon la revendication susmentionnée, **caractérisé en ce que** l'extrémité de sortie (11) dudit premier conduit (9) présente la forme d'un bec de canard.

7. Dispositif de lubrification minimale (1) selon une ou plusieurs revendications parmi les revendications susmentionnées, **caractérisé en ce que** ledit capteur (7) est optique.

8. Dispositif de lubrification minimale (1) selon une ou plusieurs revendications parmi les revendications susmentionnées, **caractérisé en ce que** ledit capteur optique (7) est de type capacitif.

9. Dispositif de lubrification minimale (1) selon une ou plusieurs revendications parmi les revendications susmentionnées, **caractérisé en ce que** ledit capteur (7) est opto-électrique.

10. Dispositif de lubrification minimale (1) selon la revendication susmentionnée, **caractérisé en ce que** ledit capteur opto-électrique (7) est une photodiode infrarouge.

11. Dispositif de lubrification minimale (1) selon une ou plusieurs revendications parmi les revendications susmentionnées, **caractérisé en ce que** ladite deuxième unité (6) comprend, pour ladite deuxième phase, le deuxième conduit d'alimentation (12) présentant un dispositif de constriction (13) pour réguler le flux de ladite deuxième phase.

12. Dispositif de lubrification minimale (1) selon une ou plusieurs revendications parmi les revendications susmentionnées, **caractérisé en ce que** ledit conduit de mélange (2) présente un diamètre interne d'une dimension non inférieure à 3 mm, ladite quantité de distribution de ladite première phase n'excédant pas 10 mm³.

13. Dispositif de lubrification minimale (1) selon une ou plusieurs revendications parmi les revendications susmentionnées, **caractérisé en ce que** ladite première phase est de l'huile et ladite deuxième phase est de l'air.

14. Dispositif de lubrification minimale (1) selon la revendication 2, **caractérisé en ce qu'**il comprend une pluralité de conduits de mélange (2), chacun étant pourvu d'un capteur individuel (7).

15. Utilisation d'un dispositif (1) comme revendiqué dans une ou plusieurs revendications parmi les revendications susmentionnées pour une lubrification minimale de roulements à billes ou de machines-outils avec extraction de copeaux.
